(19) Europäisches Patentamt
European Patent Office
Office européen des brevets

(11) **EP 1 697 046 B1**

## (12) EUROPÄISCHE PATENTSCHRIFT

(45) Veröffentlichungstag und Bekanntmachung des Hinweises auf die Patenterteilung:
**12.06.2019 Patentblatt 2019/24**

(21) Anmeldenummer: **04803683.4**

(22) Anmeldetag: **09.12.2004**

(51) Int Cl.:
**B01J 37/00** (2006.01)   **C09C 1/36** (2006.01)
**C01G 23/047** (2006.01)   **C09C 3/04** (2006.01)
**B01J 21/06** (2006.01)

(86) Internationale Anmeldenummer:
**PCT/EP2004/014026**

(87) Internationale Veröffentlichungsnummer:
**WO 2005/063395 (14.07.2005 Gazette 2005/28)**

(54) **VERFAHREN ZUR HERSTELLUNG EINER KATALYSATORPRÄPARATION UND VERWENDUNG DER KATALYSATORPRÄPARATION**

METHOD FOR PRODUCING A CATALYTIC PREPARATION AND USE OF SAID CATALYTIC PREPARATION

PROCÉDÉ POUR RÉALISER UNE PRÉ PARATION CATALYTIQUE ET UTILISATION DE CETTE PRÉPARATION CATALYTIQUE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **19.12.2003 DE 10359839**

(43) Veröffentlichungstag der Anmeldung:
**06.09.2006 Patentblatt 2006/36**

(73) Patentinhaber: **Venator Germany GmbH**
**47198 Duisburg (DE)**

(72) Erfinder:
- **PROFT, Bernd**
  **47506 Neukirchen-Vluyn (DE)**
- **HIRSCHBERG, Elke**
  **47447 Moers (DE)**
- **OPTEHOSTERT, Regina**
  **47441 Moers (DE)**
- **WINKLER, Jochen**
  **47509 Rheurdt (DE)**
- **PIPPLIES, Klaus**
  **47506 Neukirchen-Vinyn (DE)**
- **WEDLER, Michael Dr.**
  **47198 Duisburg (DE)**

(74) Vertreter: **Nobbe, Matthias**
**Demski & Nobbe**
**Patentanwälte**
**Mülheimer Strasse 210**
**47057 Duisburg (DE)**

(56) Entgegenhaltungen:
EP-A- 0 736 560     EP-A1- 1 541 638
WO-A-98/05421       DE-A1- 4 308 114
DE-A1- 4 417 185    US-A- 5 068 056
US-A- 5 808 143

**Beschreibung**

Die Erfindung betrifft ein Verfahren zur Herstellung einer Katalysatorpräparation und deren Verwendung.

Bei der Herstellung von Polyestern werden häufig Feststoffkatalysatoren eingesetzt. Solche Katalysatoren können z.B. $TiO_2$ oder vom $TiO_2$ abgeleitete Verbindungen sein. Z.B. werden in der EP 0736560 Katalysatoren aus Alkali- oder Erdalkali-Titanat beschrieben.

Bei der heterogenen Katalyse wird der Katalysator nicht im Reaktionsmedium gelöst, sondern liegt als separate, feste Phase vor. Bei einer Variante dieser Katalyse verbleibt der Katalysator als separate, feste Phase im System. In manchen Fällen, wie z.B. bei der Katalyse von Veresterungsprozessen, wird der Katalysator als Pulver zugegeben, das sich aber im Laufe der Reaktion auflöst. Dabei findet ein kontinuierlicher Übergang von der heterogenen zur homogenen Katalyse statt.

Die Verteilung des Katalysators in dem Reaktionsmedium hat einen großen Einfluss auf den Reaktionsverlauf.

Prinzipiell ist es möglich, einen heterogenen Katalysator in Pulverform dem Reaktionsmedium zuzuführen. Speziell bei kontinuierlichen Prozessen hat dieses Verfahren jedoch neben dem Nachteil einer schlechten Dosierbarkeit der Pulver Mängel hinsichtlich der schnellen Verteilung des Katalysators im Reaktionsmedium. Deswegen entspricht es dem Stand der Technik, Aufschlämmungen des Katalysators in Flüssigkeiten einzusetzen.

Da bei der Lagerung der Katalysatoraufschlämmungen die Katalysatorteilchen leicht sedimentieren, müssen solche Aufschlämmungen vor der Verwendung aufgerührt werden, weil sonst wiederum die Dosierung des Katalysators nicht hinreichend genau wäre.

Nach dem Stokes'schen Gesetz ist die Sedimentationsgeschwindigkeit $v$ proportional zum Quadrat der Durchmesser d der Katalysatorkügelchen und der Dichtedifferenz $\Delta\rho$ zwischen Feststoff und Flüssigkeit sowie umgekehrt proportional zur Viskosität $\eta$ der Suspensionsflüssigkeit:

$$v = \frac{d^2 \cdot \Delta\rho \cdot g}{18\eta} \qquad \text{(Stokes'sches Gesetz)}$$

Aus der Gleichung ist ersichtlich, dass alle Katalysatorteilchen im Laufe der Zeit sedimentieren müssen, vorausgesetzt, ihre Sedimentationsgeschwindigkeit ist größer als ihre thermische (Brown'sche) Bewegung.

Außer der Erdanziehungskraft wirkt auf die Teilchen auch die van der Waals-Anziehungskraft, auch "Dispersive Kraft" genannt. Die Dispersive Kraft verursacht eine Flockung der Teilchen untereinander, wenn keine stabilisierenden Kräfte, z.B. durch gleichnamige, elektrostatische Aufladung oder adsorbierte Polymere, dagegen wirken. Flocken die Teilchen, so entstehen größere Agglomerate, die nach der Stokes Gleichung umso schneller sedimentieren. Dafür haben geflockte, sedimentierte Systeme den Vorteil einer guten Aufrührbarkeit.

Das Gegenteil ist der Fall bei Aufschlämmungen, bei denen die Sedimentation wegen der Größe der Katalysatorteilchen aus einer flockungsstabilen Verteilung heraus erfolgt. Solche Systeme haben außer dem Nachteil des Absetzens zu einem sehr dicht gepackten, kaum noch aufrührbaren Sediment den weiteren Nachteil, dass sie meistens nicht erwünschte Hilfsstoffe (polymere Netz- und Dispergierhilfsmittel) enthalten.

WO98/05421 beschreibt stabile Dispersionen von Mitteln zur Metallpassivierung und Methoden zu ihrer Herstellung.

Aufgabe der Erfindung ist es, ein Verfahren zur Herstellung einer Katalysatorpräparaton zu schaffen, bei dem die Nachteile des Standes der Technik, nämlich insbesondere

- eine zu grob dispersen Verteilung des Katalysator
- eine schlechten Dosierbarkeit des Katalysatorpulvers
- eine schlechten Dosierbarkeit des Katalysators bei Verwendung sedimentierter Aufschlämmungen
- eine Sedimentation des Katalysators zu einem festen, nicht aufrührbaren Bodensatz

vermieden werden und bei dem der erhaltene Katalysator einerseits genügend lagerstabil ist und andererseits ein Maximum an katalytischer Aktivität entfalten kann.

Die Lösung der Aufgabe erfolgt durch ein Verfahren gemäß Anspruch 1.

Die Partikelgrößenmessung wird bevorzugt mittels Laserbeugung vorgenommen.

Überraschenderweise lässt sich der Katalysator auf diese Weise ohne Zuhilfenahme von Netz- oder Dispergierhilfsmitteln oder eines anderweitigen, die Suspension stabilisierenden Hilfsstoffes als Paste herstellen, die im ruhenden Zustand verfestigt ist. Erst ab einer Mindestschubspannung, der Fließgrenze $\tau_0$, fängt die Paste an zu fließen.

Die Fließgrenze der Katalysatorpaste steigt mit zunehmender Katalysatorkonzentration, bzw. mit abnehmender Teilchengröße. Durch Variation der Katalysatorkonzentration und der Teilchengröße lässt sich die Fließgrenze der Katalysatorpaste einstellen. Die Katalysatorpaste hat eine Fließgrenze $\tau_0$ von 1 bis 30 Pa und ganz besonders bevorzugt von 5 bis 30 Pa, bei 23 °C. Bestimmt wird die Fließgrenze nach DIN 53019 am Zylindermesssystem Z2 DIN (beschrieben im Datenblatt "Daten für Standard-Messsystem nach DIN 53019" für Viscolab/Rheolab MC 10 von Physika Meßtechnik GmbH, Stuttgart) und Auswertung nach Bingham. Dazu wird die Probe (Katalysatorpaste) in das Standardmesssystem Z2 eingefüllt und dort bei Raumtemperatur über einen Zeitraum von 24 Stunden zunächst ruhen gelassen. Die Messung erfolgt mit 100 Messpunkten mit einer Messdauer von 5 s pro Messpunkt im Schergeschwindigkeitsbereich von 0 bis 100 1/s (lineare Rampe).

Mit dem beschriebenen Verfahren ist gewährleistet, dass die stabile Katalysatorpaste durch Aufrühren in eine gut dosierbare und effektiv in die Reaktionslösung einmischbare Form gebracht werden kann, wobei die Katalysatoraktivität optimal genutzt wird. Der Katalysator liegt dabei in kolloidaler Form vor und ist ungewöhnlich lagerstabil. Auch bei einer einjährigen Lagerzeit der Suspension sedimentiert der Katalysator nicht und behält seine volle Aktivität. Weiterhin von Vorteil ist, dass der Einsatz von Hilfsstoffen zur Erzeugung einer Fließgrenze (z.B. Polyurethanverdicker, Polyacrylatverdicker, Celluloseether, hochdisperse Kieselsäure) überflüssig ist.

Die bei Normalbedingungen feste anorganische Verbindung (Katalysator oder Katalysatorbestandteil) ist ausgewählt aus folgenden Stoffen:

Titandioxid, Titandioxid-haltige Stoffe, Titanate, Zeolithe, Aluminiumoxid, Boroxide, Germaniumdioxid, Antimon(III)-oxid, Ceroxide, Bariumsulfat, Zinksulfid, Siliziumdioxid oder Mischungen dieser Stoffe.

Besonders bevorzugt sind dabei Titandioxid und die in der EP 0736560 beschriebenen titanhaltigen Katalysatoren: hydratisiertes Titandioxid der Zusammensetzung

$yTiO_2 \cdot zH_2O$ (mit y = 1, z = 0,01 bis 2), oder ein Titanat der Zusammensetzung $(Me_nO)_x \cdot (TiO_2)_y \cdot (H_2O)_z$ (mit Me = Li, Na, K, Rb, Cs, Mg, Ca, Sr, Ba; n = 1 für Me = Erdalkali und n = 2 für Me = Alkali; x = 0,0001 bis 6; y = 1; z = 0,01 bis 2).

Als Dispergieraggregat können z.B. eingesetzt werden Rührwerkskugelmühlen, Ultraschallhomogenisatoren, bzw. Ultraschalldesintegratoren, Hochdruckhomogenatoren, auf der Hochleistungspulstechnik basierende Dispergiergeräte, auf dem Prallstrahlverfahren beruhendes Dispergiergeräte (z.B. Gegenstrahlmühlen) oder Prallstrommühlen (z.B. Microjetdispergatoren). Besonders bevorzugt sind Rührwerkskugelmühlen.

Der Katalysator kann vor der Zerkleinerung in der Flüssigkeit vordispergiert, bzw. aufgeschlämmt werden. Dazu können Dissolver, Rührer (z.B. Balken- Korb- oder Zahnscheibenrührer), Hoesch-Turbinen oder Ystral-Mühlen benutzt werden. Anschließend wird der Katalysator in der Flüssigkeit mittels eines der oben beschriebenen Dispergieraggregate auf die gewünschte Korngröße gebracht.

Der Katalysator kann auch trocken zerkleinert und anschließend mit einem Dissolver, Rührer (z.B. Balken- Korb- oder Zahnscheibenrührer), einer Turbine oder Ystral-Mühle in der Flüssigkeit aufgeschlämmt werden.

Generell gilt bei der Wahl der Partikelgröße und der Katalysatorkonzentration folgende Beziehung: Je kleiner die Partikelgröße, desto kleiner sollte die Katalysatorkonzentration innerhalb der angegebenen Grenzen gewählt werden, und umgekehrt.

Als Flüssigkeit werden bevorzugt folgenden Stoffe einzeln oder im Gemisch eingesetzt: Wasser, Alkohole mit 1 bis 20 C-Atomen (z.B. Methanol, Ethanol, Propanol (alle Isomeren), Butanol (alle Isomeren)), Diole, wie Alkandiole oder Cycloalkandiole mit 2 bis 12 C-Atomen (z.B. Ethylenglycol, 1,3-Propandiol, 1,4-Butandiol, 1,4- Cyclohexandimethanol), Carbonsäuren (z.B. Ameisensäure, Essigsäure, Propansäure, Butansäure, Pentansäure) oder Fettsäuren.

Das erfindungsgemäße Verfahren kann beispielhaft wie folgt durchgeführt werden (ohne dass damit irgendwelche Einschränkungen verbunden sind):

Das Katalysatormaterial wird, sofern es nicht bereits in Pulverform vorliegt, in bekannter Weise pulverisiert, in die Flüssigkeit eingerührt und vordispergiert (z.B. mit einem Zahnscheibendissolver). Die erhaltene Suspension wird anschließend mittels eines Dispergieraggregates (z.B. Perlmühle) solange behandelt, bis die mittlere Korngröße $d_{50,3}$ einen Maximalwert von 2 μm, bevorzugt von maximal 1 μm erreicht.

Verwendung finden die erfindungsgemäß hergestellten Katalysatorpräparationen u.a. in Kondensations- und Polykondensationsreaktionen (z.B. der Amidierung von Carbonsäuren, Veresterungen von Carbonsäuren und deren Hydrolyse), bei Umesterungen von Estern, bei Umamidierungen von Amiden, bei Umlagerungen (z.B. alpha-Pinen in Kamphen, Aldol-Reaktion) und bei der Olefinpolymerisation.

Verwendung kann die erfindungsgemäß hergestellte Katalysatorpräparation weiterhin in der Fotokatalyse finden. So kann z.B. eine $TiO_2$-haltige Katalysatorpräparation in ein durch bakterielle oder chemische Schadstoffe belastetes Medium eingebracht werden, wobei die Schadstoffe in Gegenwart von Licht oxidiert werden. Einsatzgebiete derartiger Fotokatalysatoren sind Farben, Lacke, Anstriche, Papier, Tapeten, selbstreinigende Oberflächen oder antibakterielle Oberflächen.

Eine weitere Verwendungsmöglichkeit der Katalysatorpräparation ist die Wirkungsverstärkung von Katalysatorenzymsystemen. Dazu können z.B. bei der Herstellung der Katalysatorpräparation zu der in der Flüssigkeit verteilten anorganischen Verbindung Enzyme zugegeben werden. Die Enzyme lagern sich auf der Feststoffoberfläche ab. Dort liegen die Enzyme vorteilhafter Weise in verteilter Form vor und sind gleichzeitig immobil.

Die Erfindung wird anhand des folgenden Ausführungsbeispiels näher erläutert:

EP 1 697 046 B1

**Beispiel** 1: Herstellung einer stabilen titanhaltigen Katalysatorpräparation

280 g eines pulverförmigen Ti-haltigen Katalysators mit einem Ti-Gehalt von 48,1 Gew.-%, einer spezifischen BET-Oberfläche von 71,5 m$^2$/g und einer mittleren Korngröße $d_{50,3}$ von 2,7 $\mu$m, hergestellt nach dem in der EP 0736560 beschriebenen Verfahren, wurden in 520 g Monoethylenglycol mittels Zahnscheibendissolver (Durchmesser 4 cm, Drehzahl 1300 min$^{-1}$) eingerührt und 45 Minuten dispergiert. Die dabei gebildete Suspension wurde mit einer Rührwerkskugelmühle (Dispermat SL, 125 ml Mahlraum, 100 ml Glasperlen, Durchmesser 1 mm) 20 Minuten bei 3000 U/Min und 50 Minuten bei 4000 U/Min im Kreislaufverfahren gemahlen. Die Suspension wurde von den Perlen und dem Grobanteil über ein Sieb (Maschenweite 56 $\mu$m) abgetrennt. Die Partikelgrößenbestimmung (Laserbeugung, Helos) zeigte einen mittleren Partikeldurchmesser $d_{50,3}$ = 0,92 $\mu$m mit einer Verteilungsbreite von $B_{90/10}$ = 1,5 $\mu$m. Der Feststoffgehalt lag bei 35 Gew.-%. Die Suspension zeigte auch nach drei Tagen Lagerung bei 80 °C keine Bodensatzbildung. Die dispergierte Suspension wurde in ein Messsystem Z2 DIN eingefüllt und bei Raumtemperatur 48 Stunden stehen gelassen. Die Messung erfolgte mit 100 Messpunkten mit einer Messdauer von 5 s pro Messpunkt im Schergeschwindigkeitsbereich von 0 bis 100 1/s (lineare Rampe). Die Schubspannung (bei Beginn der Scherbelastung) der Suspension wurde mit $\tau_0$ = 22,6 Pa bestimmt (Messung nach DIN 53019, Z2 DIN, Auswertung nach Bingham).

**Patentansprüche**

1. Verfahren zur Herstellung einer Katalysatorpräparation, **dadurch gekennzeichnet, dass** der Katalysator, enthaltend mindestens eine bei Normalbedingungen feste anorganische Verbindung, die aus Titandioxid, Titandioxidhaltige Stoffe, Titanate, Zeolithe, Aluminiumoxid, Boroxide, Germaniumdioxid, Antimon(III)-oxid, Ceroxide, Bariumsulfat, Zinksulfid, Siliziumdioxid oder Mischungen davon ausgewählt wird, mittels eines Dispergieraggregates in Partikel mit einer mittleren Korngröße $d_{50,3}$ von maximal 2 $\mu$m, dargestellt nach DIN 66141 und 66144, zerkleinert wird und in einer Konzentration von 1 bis 50 Gew.-%, relativ zur fertigen Katalysatorpräparation, in einer Flüssigkeit ohne Zuhilfenahme von Netz- oder Dispergierhilfsmitteln oder eines anderweitigen, die Suspension stabilisierenden Hilfsstoffes verteilt wird, wobei eine Paste, die im ruhenden Zustand verfestigt ist und erst ab einer Mindestschubspannung mit einer Fließgrenze $\tau_0$ von 1 bis 30 Pa bei 23°C zu fließen anfängt, erhalten wird.

2. Verfahren nach Anspruch 1, **dadurch gekennzeichnet, dass** der Katalysator in einer Konzentration von 20 bis 40 Gew.-%, relativ zur fertigen Katalysatorpräparation in einer Flüssigkeit verteilt wird.

3. Verfahren nach Anspruch 1 oder 2, **dadurch gekennzeichnet, dass** die feste anorganische Verbindung ausgewählt wird aus folgenden Stoffen:

   hydratisiertes Titandioxid der Zusammensetzung yTiO$_2$ · zH$_2$O (mit y = 1, z = 0,01 bis 2),
   oder ein Titanat der Zusammensetzung (Me$_n$O)$_x$ · (TiO$_2$)$_y$ · (H$_2$O)$_z$ (mit Me = Li, Na, K, Rb, Cs, Mg, Ca, Sr, Ba; n = 1 für Me = Erdalkali und n = 2 für Me = Alkali; x = 0,0001 bis 6; y = 1; z = 0,01 bis 2).

4. Verfahren nach einem der Ansprüche 1 bis 3, **dadurch gekennzeichnet, dass** die Partikel eine mittlere Korngröße $d_{50,3}$ von maximal 1 $\mu$m aufweisen.

5. Verfahren nach einem der Ansprüche 1 bis 4, **dadurch gekennzeichnet, dass** als Partikelzerkleinerungsaggregat eingesetzt werden: Rührwerkskugelmühlen, Ultraschallhomogenisatoren, oder Ultraschalldesintegratoren, Hochdruckhomogenatoren, auf der Hochleistungspulstrechnik basierende Dispergiergeräte, auf dem Prallstrahlverfahren beruhendes Dispergiergeräte oder Prallstrommühlen.

6. Verfahren nach einem der Ansprüche 1 bis 5, **dadurch gekennzeichnet, dass** als Flüssigkeit folgenden Stoffe einzeln oder im Gemisch eingesetzt werden: Wasser, Alkohole mit 1 bis 20 C-Atomen, Diole, Carbonsäuren oder Fettsäuren.

7. Verwendung der nach einem Verfahren gemäß einem der Ansprüche 1 bis 6 hergestellten Katalysatorpräparation in Kondensations- und Polykondensationsreaktionen, bei Umesterungen von Estern, bei Umamidierungen von Amiden, bei Umlagerungen und bei der Olefinpolymerisation.

8. Verwendung der nach einem Verfahren gemäß einem der Ansprüche 1 bis 6 hergestellten Katalysatorpräparation zur Fotokatalyse.

4

**9.** Verwendung der nach einem Verfahren gemäß einem der Ansprüche 1 bis 6 hergestellten Katalysatorpräparation zur Wirkungsverstärkung von Katalysatorenzymsystemen .

**Claims**

**1.** Process for the preparation of a catalyst preparation, **characterized in that** the catalyst, containing at least one inorganic compound being solid under normal conditions, which is selected from titanium dioxide, titanium dioxide-containing substances, titanates, zeolites, aluminium oxide, boron oxides, germanium dioxide, antimony(lll) oxide, cerium oxides, barium sulfate, zinc sulfide, silicon dioxide or mixtures thereof, is comminuted by means of a dispersing device into particles having an average particle size $d_{50,3}$ of at most 2 $\mu$m, represented according to DIN 66141 and 66144, and is dispersed in a concentration of from 1 to 50 % by weight, relative to the finished catalyst preparation, in a liquid without the aid of wetting agents or dispersing agents or any other suspension-stabilizing auxiliary agent, wherein a paste is obtained, which is solidified in the dormant state and begins to flow at 23°C from a minimum shear stress with a yield point $\tau_0$ of 1 to 30 Pa only.

**2.** Process according to claim 1, **characterized in that** the catalyst is distributed in a liquid in a concentration of 20 to 40% by weight relative to the finished catalyst preparation.

**3.** Process according to claim 1 or 2, **characterized in that** the solid inorganic compound is selected from the following substances:

hydrated titanium dioxide of composition $yTiO_2 \cdot zH_2O$ (with y = 1, z = 0.01 to 2)
or a titanate of the composition $(Me_nO)_x \cdot (TiO_2)_y \cdot (H_2O)_2$ (with Me = Li, Na, K, Rb, Cs, Mg, Ca, Sr, Ba; n = 1 for Me = alkaline earth metal and n = 2 for Me = alkali metal; x = 0.0001 to 6; y = 1; z = 0.01 to 2).

**4.** Process according to any one of claims 1 to 3, **characterized in that** the particles have an average particle size $d_{50,3}$ of at most 1 $\mu$m.

**5.** Process according to any one of claims 1 to 4, **characterized in that** agitator bead mills, ultrasonic homogenizers, or ultrasonic desintegrators, highpressure homogenizers, dispersing devices based on high-performance pulse technology, dispersing devices based on impact jet technology, or impact current mills are used as particles comminuting device.

**6.** Process according to any one of claims 1 to 5, **characterized in that** the following substances are used as liquids individually or in a mixture: water, alcohols having 1 to 20 carbon atoms, diols, carboxylic acids or fatty acids.

**7.** Use of the catalyst preparation prepared by a process according to any one of claims 1 to 6 in condensation and polycondensation reactions, in transesterifications of esters, in transamidations of amides, in rearrangements and in olefin polymerization.

**8.** Use of the catalyst preparation prepared by a process according to any one of claims 1 to 6 for photocatalysis.

**9.** Use of the catalyst preparation prepared by a process according to any one of claims 1 to 6 for enhancing the action of catalyst enzyme systems.

**Revendications**

**1.** Procédé de fabrication d'une préparation de catalyseur, **caractérisé en ce que** ledit catalyseur, contenant au moins un composé inorganique lequel est solide dans des conditions normales et lequel est choisi parmi le dioxyde de titane, les matières contenant du dioxyde de titane, les titanates, les zéolithes, l'oxyde d'aluminium, les oxydes de bore, le dioxyde de germanium, l'oxyde d'antimoine (III), les oxydes de cérium, le sulfate de baryum, le sulfure de zinc, le dioxyde de silicium ou leurs mélanges, est broyé au moyen d'un appareil de dispersion en particules dont la granulométrie moyenne $d_{50,3}$ est inférieure ou égale à 2 $\mu$m, leur fabrication étant conforme aux DIN 66141 et 66144, et est distribué dans un liquide sans avoir recours à des agents de mouillage ni des agents auxiliaires de dispersion ni d'autres agents auxiliaires susceptibles de stabiliser la suspension, da manière à ce que sa concentration soit comprise entre 1 et 50 % en poids, par rapport à la préparation de catalyseur prête à l'emploi, pour ainsi obtenir une pâte qui est solidifiée lorsqu'elle est au repos et qui ne commence à se refluidifier à 23 °C qu'en subissant une contrainte de cisaillement minimale correspondant à une limite d'élasticité $\tau_0$ comprise entre 1 et 30 Pa.

2.  Procédé selon la revendication 1, **caractérisé en ce que** ledit catalyseur est distribué dans un liquide de manière à ce que sa concentration soit comprise entre 20 et 40 % en poids, par rapport à la préparation de catalyseur prête à l'emploi.

3.  Procédé selon les revendications 1 ou 2, **caractérisé en ce que** ledit composé inorganique solide est choisi parmi les matières suivantes : dioxyde de titane sous forme d'hydrate ayant la composition suivante
    $yTiO_2 \cdot zH_2O$ (avec y = 1, z = 0,01 à 2),
    ou un titanate ayant la composition $(Me_nO)_x \cdot (TiO_2)_y \cdot (H_2O)_z$ (avec Me = Li, Na, K, Rb, Cs, Mg, Ca, Sr, Ba ; n = 1 pour Me = alcalino-terreux et n = 2 pour Me = alcalin ; x = 0,0001 à 6 ; y = 1 ; z = 0,01 à 2).

4.  Procédé selon l'une des revendications 1 à 3, **caractérisé en ce que** lesdites particules présentent une granulométrie moyenne $d_{50,3}$ inférieure ou égale à 1 $\mu$m.

5.  Procédé selon l'une des revendications 1 à 4, **caractérisé en ce que** l'on met en oeuvre en tant qu'appareil de broyage de particules : des broyeurs-agitateurs à billes, des homogénéisateurs aux ultrasons, des désintégrateurs aux ultrasons, des homogénéisateurs haute-pression, des dispositifs de dispersion basés sur la technologie des impulsions à haute énergie, des dispositifs de dispersion basés sur le procédé des jets d'impact ou des broyeurs à flux d'impact.

6.  Procédé selon l'une des revendications 1 à 5, **caractérisé en ce que** l'on met en oeuvre, en tant que liquide, les matières suivantes, seules ou en mélange : de l'eau, des alcools comportant 1 à 20 atomes de C, des diols, des acides carboxyliques ou des acides gras.

7.  Utilisation des préparations de catalyseur fabriquées selon l'une des revendications 1 à 6 dans des réactions de condensations et de polycondensation, dans des transestérifications d'esters, dans des transamidations d'amides, dans des réarrangements et dans la polymérisations d'oléfines.

8.  Utilisation des préparations de catalyseur fabriquées selon l'une des revendications 1 à 6 pour effectuer une photocatalyse.

9.  Utilisation des préparations de catalyseur fabriquées selon l'une des revendications 1 à 6 pour renforcer l'efficacité de systèmes catalyseur-enzyme.

**EP 1 697 046 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0736560 A
- WO 9805421 A